# EUROPEAN PATENT SPECIFICATION

(11) **EP 2 832 430 B1**
(45) Date of publication and mention of the grant of the patent: **08.08.2018**
(21) Application number: 13770166.0
(22) Date of filing: 27.03.2013
(51) Int. Cl.: B01D 71/02, B01D 69/04, B01D 69/10, B01D 69/12, C04B 41/85, C04B 41/89, B01D 69/02

(54) **HONEYCOMB SHAPED POROUS CERAMIC BODY, MANUFACTURING METHOD FOR SAME, AND HONEYCOMB SHAPED CERAMIC SEPARATION MEMBRANE STRUCTURE**
WABENFÖRMIGER PORÖSER KERAMIKKÖRPER, HERSTELLUNGSVERFAHREN DAFÜR UND WABENFÖRMIGE KERAMISCHE TRENNMEMBRANSTRUKTUR
CORPS EN CÉRAMIQUE POREUX EN FORME DE NID D'ABEILLES, SON PROCÉDÉ DE FABRICATION ET STRUCTURE DE MEMBRANE À SÉPARATION EN CÉRAMIQUE EN FORME DE NID D'ABEILLES

(30) Priority: 30.03.2012 JP 2012080213
(43) Date of publication of application: 04.02.2015
(73) Proprietor: NGK Insulators, Ltd., Nagoya-shi, Aichi 467-8530 (JP)
(72) Inventor: UCHIKAWA, Tetsuya, Nagoya-shi Aichi 467-8530 (JP); MIYAHARA, Makoto, Nagoya-shi Aichi 467-8530 (JP); ICHIKAWA, Makiko, Nagoya-shi Aichi 467-8530 (JP); YAJIMA, Kenji, Nagoya-shi Aichi 467-8530 (JP); TERANISHI, Makoto, Nagoya-shi Aichi 467-8530 (JP); SUZUKI, Hideyuki, Nagoya-shi Aichi 467-8530 (JP)
(74) Representative: TBK
(86) International application number: PCT/JP2013/059146
(87) International publication number: WO 2013/146956

(56) References cited:
- WO-A1-2009/001970
- WO-A1-2010/134514
- JP-A- H06 172 057
- JP-A- 2010 094 585
- JP-A- 2010 228 946
- JP-A- 2010 228 948
- US-A1- 2008 093 290
- PERA-TITUS ET AL: "Preparation of inner-side tubular zeolite NaA membranes in a continuous flow system", SEPARATION AND PURIFICATION TECHNOLOGY, ELSEVIER SCIENCE, AMSTERDAM, NL, vol. 59, no. 2, 14 January 2008 (2008-01-14), pages 141-150, XP022420773, ISSN: 1383-5866, DOI: 10.1016/J.SEPPUR.2007.05.038
- WEYD ET AL: "Transport of binary water-ethanol mixtures through a multilayer hydrophobic zeolite membrane", JOURNAL OF MEMBRANE SCIENCE, ELSEVIER BV, NL, vol. 307, no. 2, 18 December 2007 (2007-12-18), pages 239-248, XP022392384, ISSN: 0376-7388

## Description

### Technical Field

The present invention relates to a honeycomb shaped porous ceramic body having a pressure resistance, a manufacturing method for the same, and a honeycomb shaped ceramic separation membrane structure including a separation layer.

### Background Art

In recent years, ceramic filters have been used to selectively collect only a specific component from a mixture (a mixed fluid) of multiple components. The ceramic filter is more excellent in mechanical strength, durability, corrosion resistance and the like as compared with an organic polymer filter, and hence the ceramic filter is preferably applied to removal of a suspended substance, bacteria, dust and the like from a liquid or a gas, in a wide range of fields of water treatment, exhaust gas treatment, pharmaceutical, food, or the like.

In such a ceramic filter, for the purpose of improving a permeation performance while maintaining a separation performance, it is necessary to enlarge a membrane area (the area of a separation membrane), and for that, the membrane preferably possesses a honeycomb shape. Furthermore, the filter of the honeycomb shape (a honeycomb shaped ceramic separation membrane structure) has advantages such as resistivity to breakage and achievement of cost reduction as compared with a tube type. In many cases, the honeycomb shaped ceramic separation membrane structure includes a porous substrate whose outer shape is columnar and which has therein a large number of parallel through channels (referred to as cells) formed in an axial direction thereof. Furthermore, the separation membrane (a separation layer) having smaller pore diameters as compared with the porous substrate is formed on an inner wall surface provided with the cells.

In the honeycomb shaped ceramic separation membrane structure (a precision filtration membrane, an ultrafiltration membrane, a pervaporation membrane, a gas separation membrane, or a reverse osmosis membrane), a permeation flow rate is preferably increased by applying a high pressure during operation. Particularly, in the ultrafiltration membrane, the gas separation membrane and the reverse osmosis membrane, a permeation coefficient of the separation membrane is small, and hence it is necessary to perform separation and purification under a high operation pressure. In Patent Document 1, there has been disclosed a substrate for a zeolite having a high corrosion resistance. In Patent Document 2, there has been reported a pressure-resistant zeolite separation membrane having a zeolite membrane thickness of 0.5 to 30 µm. Furthermore, in Patent Document 3, there has been disclosed a cross flow filtration device in which a permeation flow rate is improved.

JP2010094585 (A) discloses a separation device 1 of a liquid mixture being provided with a membrane module 10 filtering the liquid mixture; a circulation pump 20 sending the liquid mixture into the membrane module 10; an original liquid tank 30 storing the liquid mixture to be filtered; a heat exchanger 40 cooling evaporated filtrate; a heat exchanger 50 controlling the temperature of the liquid mixture; a filtrate tank 60 recovering the filtrate; and a vacuum pump 70 evacuating the secondary side of the membrane module 10. The separation device 1 separates the filtrate of the liquid mixture pumped through the membrane module 10 in the evaporated state in the permeated side, that is, performs separation by a filtering system combining a cross flow filtration system with a pervaporation system.

Pera-Titus M. et al. :"Preparation of inner-side tubular zeolite NaA membranes in a continuous flow system", Separation and Purification Technology, Elsevier Science, Amsterdam, NL, vol. 59, no. 2, pages 141-150, XP022420773, ISSN: 1383-5866, DOI: 10.1016/J.SEPPUR.2007.05.038 describes the synthesis of zeolite NaA membranes on inner side of porous titania (rutile) asymmetric tubular supports in a flow system where the synthesis gel was circulated through the support with flow rates in the range 1.5 to 4 ml/min by the action of gravity.

US2008093290 (A1) discloses a ceramic porous membrane formed with less membrane formation times and having less defects, a small and uniform thickness and a high resolution, and a ceramic filter. A silica membrane as a ceramic porous membrane is formed on a titania UF membrane as an ultrafiltration membrane (a UF membrane) formed on a porous base member which is a microfiltration membrane and having an average pore diameter smaller than that of the porous base member, the silica membrane has an average pore diameter smaller than that of the titania UF membrane and a part of the silica membrane permeates the titania UF membrane.

Weyd M. et al.:"Transport of binary water-ethanol mixtures through a multilayer hydrophobic zeolite membrane", Journal of Membrane Science, Elsevier BV, NL, vol. 307, no. 2, pages 239-248, XP022392384, ISSN: 0376-7388 describes experimental and theoretical investigations on the transport of water-ethanol mixtures through a hydrophobic tubular ZSM-5 (Si/Al=300) zeolite membrane during pervaporation.

WO2010134514 (A1) provides a ceramic pervaporation membrane and ceramic vapor-permeable membrane, wherein the total aperture length of exhaust channels parallel to the channel direction of water-collection cells is at least 10% of the length of filtration cells, and the ratio m/n of the number of rows m of filtration cells to the number of rows n of water-collection cells is between 1 and 4.

JP2010228948 (A) mentions an alumina porous body having a porosity of 15 to 45% and an average pore size of 2 to 15 µm.

### Citation List

### Patent Documents

[Patent Document 1] JP-A-2009-220074
[Patent Document 2] JP 3128517
[Patent Document 3] JP-B-H06-016819

### Summary of the Invention

### Problem to be Solved by the Invention

However, when a zeolite membrane is employed as a separation layer, a conventional honeycomb shaped ceramic substrate has the problem that a strength of the substrate deteriorates on high temperature alkali conditions during formation of the zeolite membrane. In Patent Document 1, a component of an alumina substrate and the like are strictly regulated. Furthermore, a firing temperature is high and cost is high. On the other hand, also in Patent Documents 2 and 3, any description is not made concerning strength deterioration or an influence of the shape.

An object of the present invention is to provide a honeycomb shaped porous ceramic body in which a strength deteriorates less than before after a separation layer is formed, a manufacturing method for the porous ceramic body, and a honeycomb shaped ceramic separation membrane structure.

### Means for Solving the Problem

The present invention provides for a honeycomb shaped porous ceramic body according to claim 1 and a manufacturing method for said honeycomb shaped porous ceramic body according to claim 9.

Beneficial embodiments are described in the dependent claims 2-8.

The present inventors have found that by using titania as an inorganic bonding material of an intermediate layer, when a zeolite membrane is formed as a separation layer, a strength deteriorates less than before.

### Effect of the Invention

In a honeycomb shaped porous ceramic body of the present invention, a strength does not easily deteriorate due to formation of a zeolite membrane as a separation layer. The honeycomb shaped ceramic separation membrane structure of the present invention has a higher strength than before.

### Brief Description of the Drawings

Fig. 1 is a perspective view showing a cut-out part of one embodiment of a honeycomb shaped ceramic separation membrane structure including a honeycomb shaped porous ceramic body according to the present invention;
Fig. 2 is a partially enlarged sectional view showing an enlarged vicinity of a separation cell of a cross section cut along the line A-A' of Fig. 1;
Fig. 3 is a schematic view showing an end face of the honeycomb shaped porous ceramic body;
Fig. 4A is a diagram showing Embodiment 1 of a layer structure on a substrate;
Fig. 4B is a diagram showing Embodiment 2 of the layer structure on the substrate;
Fig. 4C is a diagram showing Embodiment 3 of the layer structure on the substrate;
Fig. 4D is a diagram showing Embodiment 4 of the layer structure on the substrate;
Fig. 5A is a schematic view showing an embodiment in which the honeycomb shaped ceramic separation membrane structure is attached to a housing, and showing a cross section parallel to a cell extending direction of the honeycomb shaped ceramic separation membrane structure;
Fig. 5B is a schematic view showing another embodiment in which a honeycomb shaped ceramic separation membrane structure is attached to a housing, and showing a cross section parallel to a cell extending direction of the honeycomb shaped ceramic separation membrane structure;
Fig. 6 is a schematic view showing a state where a seeding slurry is poured in a particle adhering step;
Fig. 7 is a schematic view showing one embodiment of a membrane forming step of forming a zeolite membrane on the honeycomb shaped porous ceramic body by hydrothermal synthesis; and
Fig. 8 is a perspective view showing another embodiment of the honeycomb shaped ceramic separation membrane structure according to the present invention.

### Mode for Carrying out the Invention

Hereinafter, embodiments of the present invention will be described with reference to the drawings. The present invention is not limited to the following embodiments, and changes, modifications and improvements can be added without departing from the gist of the invention.

### 1. Separation Membrane Structure

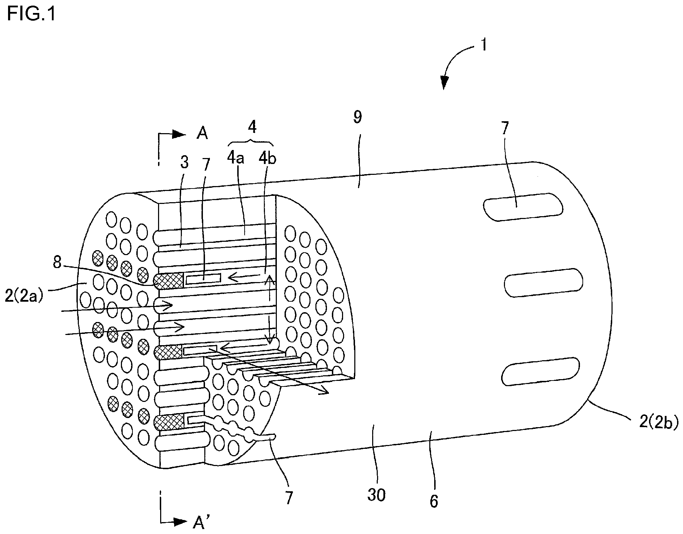

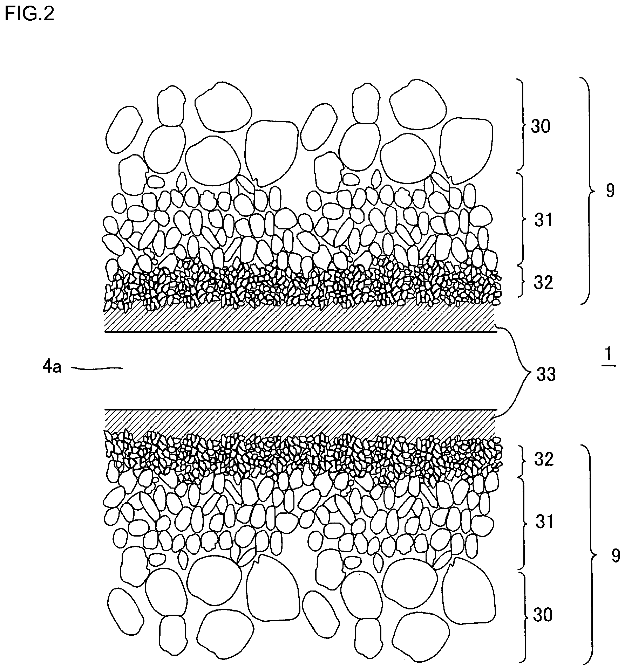

Fig. 1 shows one embodiment of a honeycomb shaped ceramic separation membrane structure 1 including a honeycomb shaped porous ceramic body 9 according to the present invention. Furthermore, Fig. 2 shows a partially enlarged sectional view showing an enlarged vicinity of a separation cell of a cross section cut along the line A-A' of Fig. 1. The honeycomb shaped ceramic separation membrane structure 1 (hereinafter also referred to simply as the separation membrane structure) includes a substrate 30 of a honeycomb shape, an intermediate layer 31, and a separation layer 33 (in the present description, the substrate 30 and the intermediate layer 31 are referred to as the honeycomb shaped porous ceramic body 9). Furthermore, the separation membrane structure 1 of the present invention preferably includes an alumina surface layer 32 formed by alumina on the intermediate layer 31 of the porous body 9. It is to be noted that when the alumina surface layer 32 is included, the alumina surface layer 32 is also included in the honeycomb shaped porous ceramic body 9.

The separation membrane structure 1 has partition walls 3 made of the honeycomb shaped porous ceramic body 9 (hereinafter also referred to simply as the porous body 9) provided with a large number of pores, and cells 4 that become through channels of a fluid are formed by the partition walls 3. The intermediate layer 31 is provided with a large number of pores, has a smaller average pore diameter than the surface of the substrate 30, and is disposed on the surface of the substrate 30. At least a part of the intermediate layer of the porous body 9 has a structure in which aggregate particles are bonded to one another by a component of an inorganic bonding material. Furthermore, the component of the inorganic bonding material is titania. In other words, in the intermediate layer 31 which is in contact with the substrate 30 (at least a layer which is in contact with the substrate 30, when the intermediate layer 31 includes a plurality of layers), the aggregate particles are bonded by the inorganic bonding material of titania. A shape of the substrate 30 is a honeycomb shape, so that a membrane area per unit volume can be enlarged, and a treatment ability can be heightened.

Even when the porous body 9 is immersed into an alkali solution of pH 11 or more at 138°C or more for 30 hours, a strength preferably does not deteriorate. Specifically, for the porous body 9, its strength preferably does not deteriorate after the separation layer 33 is formed, and the strength preferably does not deteriorate after a zeolite membrane as the separation layer 33 is formed on the surface of the porous body 9 by hydrothermal synthesis. The hydrothermal synthesis of the zeolite membrane is performed by immersing the porous body 9 into an alkaline solution, and hence the strength of the porous body has heretofore noticeably deteriorated.

The separation membrane structure 1 of the present invention includes the separation layer 33 which separates a mixture, directly or indirectly on the intermediate layer 31 of the porous body 9 ("indirectly" means that when the alumina surface layer 32 is included, the separation layer 33 is formed on the alumina surface layer 32, and hence the alumina surface layer does not directly come in contact with the intermediate layer 31). The separation layer 33 is preferably made of a zeolite. Furthermore, an example of the zeolite is a DDR type zeolite.

The separation membrane structure 1 preferably has an internal pressure breaking strength of 16 MPa or more. The internal pressure breaking strength corresponds to a pressure applied into the cells 4a to break the separation membrane structure 1. The separation membrane structure has a high internal pressure breaking strength, and hence a permeation flow rate can be increased by applying a high pressure during an operation.

For the porous body 9 including the substrate 30 and the intermediate layer 31 (and the alumina surface layer 32), its outer shape is columnar, and the porous body has an outer peripheral surface 6. Furthermore, the porous body includes a plurality of separation cells 4a formed in a row to extend through the porous body from one end face 2a to the other end face 2b, and a plurality of water collecting cells 4b formed in a row from the one end face 2a to the other end face 2b. In the separation membrane structure 1, a sectional shape of the separation cells 4a and the water collecting cells 4b is circular. Furthermore, open ends of both the end faces 2a, 2b of the separation cells 4a are open (remain open). For the water collecting cells 4b, open ends of both the end faces 2a, 2b are plugged with a plugging material to form plugging portions 8, and discharge through channels 7 are disposed so that the water collecting cells 4b communicate with an external space. Furthermore, the separation layer 33 is disposed at the surface of the intermediate layer 31 on an inner wall surface of the separation cells 4a whose sectional shapes are circular (on the alumina surface layer 32, when the alumina surface layer 32 is included). A glass seal 35 is preferably disposed to cover at least the end faces 2a, 2b of the substrate 30. The separation membrane structure 1 is a ceramic filter which separates the mixture. Hereinafter, description will be made in more detail.

### (Substrate)

In the substrate 30, an average pore diameter is preferably from 5 to 25 µm. The average pore diameter is more preferably from 5 µm to 20 µm and further preferably from 6 µm to 20 µm. When the average pore diameter of the substrate 30 is 5 µm or more, a permeation speed of a permeated separation component separated by the separation layer 33 in the substrate 30 is fast, and a permeation flow rate per unit time can sufficiently be maintained. On the other hand, when the average pore diameter is 25 µm or less, a membrane on the substrate is easily uniformly formed.

Furthermore, a porosity of the substrate 30 is preferably from 25 to 50%. The average pore diameter and the porosity are values measured by a mercury porosimeter.

A material of the substrate 30 is ceramic. Preferably, a material of aggregate particles is alumina (Al₂O₃), titania (TiO₂), mullite (Al₂O₃·SiO₂), potsherd, cordierite (Mg₂Al₄Si₅O₁₈) or the like. In these materials, alumina is further preferable because a raw material (aggregate particles) in which particle diameters are controlled is easily obtained, a stable kneaded material can be formed, and a corrosion resistance is high. The inorganic bonding material is preferably one selected from the group consisting of sinterable alumina, silica, glass frit, clay mineral, and sinterable cordierite. The inorganic bonding material is a bonding material to bond the aggregate particles, and is an inorganic component which sinters and solidifies at a temperature at which a component of aggregates does not sinter. When alumina is selected as the component of the aggregates, sinterable alumina has an average particle diameter of 1/10 or less of that of the aggregates. When cordierite is selected as the component of the aggregates, sinterable cordierite has an average particle diameter of 1/10 or less of that of the aggregates. It is to be noted that the average particle diameter is a value measured by "a laser diffraction method" regardless of the substrate 30, the intermediate layer 31 or the like. Furthermore, examples of the clay mineral include kaolin, dolomite, montmorillonite, feldspar, calcite, talc, and mica.

There is not any special restriction on the whole shape or size of the substrate 30, as long as a separating function thereof is not disturbed. Examples of the whole shape include a columnar (cylindrical) shape, a quadrangular pillar shape (a tubular shape in which a cross section perpendicular to a central axis is quadrangular), and a triangular pillar shape (a tubular shape in which the cross section perpendicular to the central axis is triangular). Above all, the shape is preferably columnar so that the substrate is easily extruded, has less firing deformation, and is easily sealed to a housing. When the substrate is used in precise filtration or ultrafiltration, the shape is preferably columnar in which a diameter of the cross section perpendicular to the central axis is from 30 to 220 mm, and a length in a central axis direction is from 150 to 2000 mm.

Examples of the sectional shape of the cells 4 of the substrate 30 (the shape in the cross section perpendicular to an extending direction of the cells 4) include a circular shape and a polygonal shape, and examples of the polygonal shape include a quadrangular shape, a pentangular shape, a hexagonal shape and a triangular shape. It is to be noted that the extending direction of the cells 4 is the same as the central axis direction, when the substrate 30 is columnar (cylindrical).

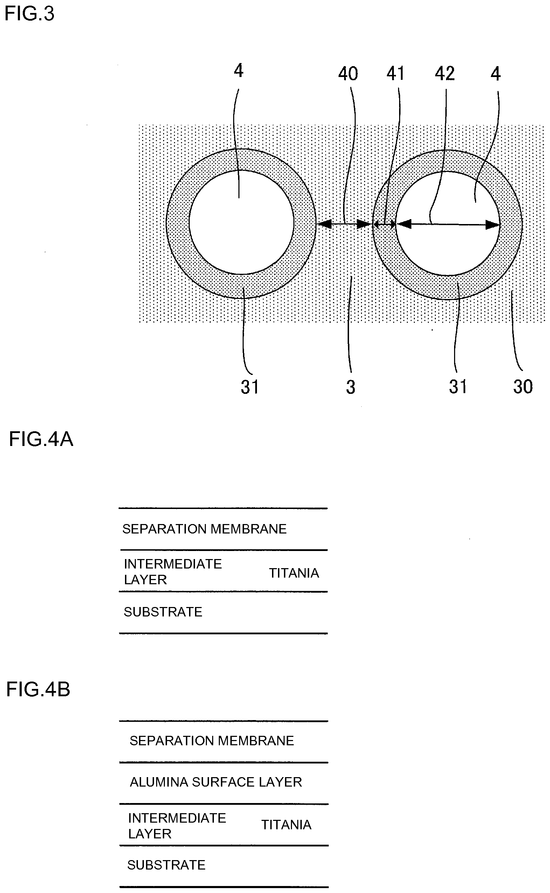

When the sectional shape of the cells 4 of the substrate 30 is circular, a diameter of each of the cells 4 (a cell diameter 42: see Fig. 3) is preferably from 1 to 5 mm. When the diameter is 1 mm or more, the membrane area can sufficiently be maintained. When the diameter is 5 mm or less, a strength of the ceramic filter can sufficiently be maintained.

In the substrate 30, a substrate thickness 40 of the shortest portion between the cells 4 that does not include the intermediate layer 31, the alumina surface layer 32 and the separation layer 33 is preferably 0.51 mm or more and 1.55 mm or less. As shown in Fig. 3, the substrate thickness 40 is a thickness of the extruded substrate 30, and a thickness of a portion which does not include the intermediate layer 31, the alumina surface layer 32 and the separation layer 33. The substrate thickness 40 is more preferably 0.51 mm or more and 1.2 mm or less and further preferably 0.65 mm or more and 1.0 mm or less. When the substrate thickness 40 is 0.51 mm or more, the internal pressure breaking strength can sufficiently be maintained. However, when the substrate thickness 40 is excessively large, the number of the cells which can be disposed in a predetermined volume decreases, and hence the membrane area becomes smaller. In consequence, the permeation flow rate lowers, and hence the substrate thickness is preferably 1.55 mm or less. It is to be noted that when the cells 4 are circular, the substrate thickness 40 is a distance shown in Fig. 3, but when the cells have another shape, the substrate thickness is the shortest distance between the cells 4.

### (Intermediate Layer)

The porous body 9 of the present invention is a honeycomb shaped porous ceramic body including the honeycomb shaped substrate 30 and the intermediate layer 31 (and the alumina surface layer 32). A material of the aggregate particles of the intermediate layer 31 is preferably one selected from the group consisting of alumina, titania, mullite, potsherd and cordierite. Furthermore, the inorganic bonding material of the intermediate layer 31 is titania. The inorganic bonding material is an inorganic component which sinters and solidifies at a temperature at which the component of the aggregates does not sinter. It is to be noted that the average particle diameter is a value measured by "the laser diffraction method" regardless of the substrate 30, the intermediate layer 31 or the like. Furthermore, examples of the clay mineral include kaolin, dolomite, montmorillonite, feldspar, calcite, talc, and mica.

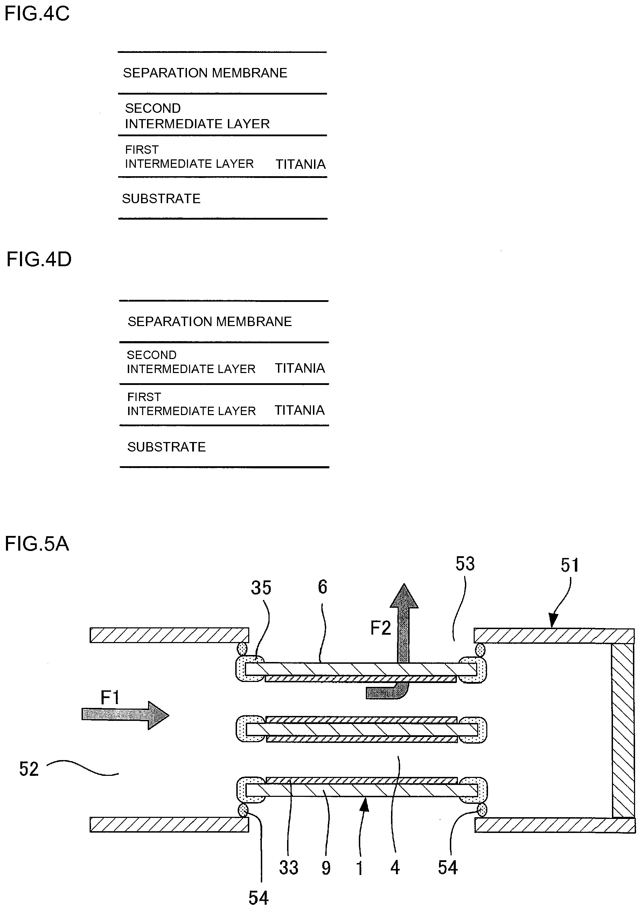

When a plurality of layers is formed in addition to the separation layer (a separation membrane) on the substrate 30, the aggregate particles are bonded by the inorganic bonding material of titania in at least the layer in contact with the substrate 30. Fig. 4A to Fig. 4D show embodiments of a layer structure on the substrate 30. Fig. 4A shows the embodiment in which the intermediate layer 31 is formed on the substrate 30. Fig. 4B shows the embodiment in which the intermediate layer 31 and the alumina surface layer 32 are formed on the substrate 30 (the same as in Fig. 2). Fig. 4C and Fig. 4D show embodiments in which a plurality of intermediate layers 31 are formed on the substrate 30. In Fig. 4A to Fig. 4D, aggregate particles of at least the intermediate layer 31 in contact with the substrate 30 are bonded by titania. When the aggregate particles of the intermediate layer 31 in contact with the substrate 30 are bonded by titania in this manner, the strength does not deteriorate even in the case of exposure in the alkali solution.

A content ratio of titania included in the intermediate layer 31 (fired) is preferably from 5 to 40 mass% and more preferably from 15 to 25 mass%. The content ratio of 5 mass% or more is sufficient for an amount of the bonding material. When the content ratio is 40 mass% or less, there is not any useless titania that does not contribute as the bonding material, and manufacturing cost can be suppressed. It is to be noted that the percentage (mass%) of the component of the inorganic bonding material in the inorganic solid content = (the inorganic bonding material)/(the aggregate particles + the inorganic bonding material) x 100. The percentage of the inorganic solid component and the content ratio of titania are values measured by EDS (energy dispersive spectroscopy X-ray analysis).

When the intermediate layer 31 is constituted of a plurality of layers or when the intermediate layer 31 and the alumina surface layer 32 are disposed, the respective intermediate layers 31 (and the alumina surface layer 32) are preferably disposed so that the average pore diameter successively decreases from the side of the substrate 30 toward the side of the separation layer 33. Specifically, the intermediate layer is preferably constituted of the intermediate layer 31 having an average pore diameter of the order of 1 µm and the alumina surface layer 32 having an average pore diameter of the order of 0.1 µm. The average pore diameter of the intermediate layer 31 is a value measured by an air flow method described in ASTM F316.

A thickness of the intermediate layer 31 (an intermediate layer thickness 41) is preferably 150 µm or more and 500 µm or less. When the intermediate layer 31 is constituted of a plurality of layers, the intermediate layer thickness 41 is a total of thicknesses of all the layers. The intermediate layer thickness is more preferably 160 µm or more and 400 µm or less, and further preferably 200 µm or more and 300 µm or less.

When the intermediate layer thickness 41 is excessively large, the cell diameter 42 accordingly becomes smaller. Therefore, the membrane area of the separation layer of the outermost layer decreases, and hence a membrane treatment ability deteriorates. When the intermediate layer thickness 41 is excessively small, the strength of the original porous body 9 prior to the hydrothermal synthesis deteriorates.

Furthermore, a substrate thickness of the shortest portion between the cells that does not include the intermediate layer 31 and the separation layer 33 is 0.51 mm or more and 1.55 mm or less, and a ratio of the substrate thickness/the intermediate layer thickness is preferably 2.5 or more and 10 or less (see Fig. 3). When the intermediate layer thickness 41 and the substrate thickness 40 are in the above range and the ratio of the substrate thickness/the intermediate layer thickness is further in the above range, the strength deterioration of the porous body 9 during the formation of the separation layer 33 can be decreased.

### (Alumina Surface Layer)

The alumina surface layer 32 is a layer formed on the intermediate layer 31 in the outermost surface of the porous body 9 by use of alumina as a main component. Here, the main component means that the alumina surface layer 32 includes 50 mass% or more of alumina. When alumina is included as the main component, the strength can be improved. A ratio of the component is evaluated by a mass ratio obtained by converting an element ratio measured by the EDS in terms of an oxide. The porous body 9 preferably includes the alumina surface layer 32. The alumina surface layer 32 is included, and hence the strength of the separation layer 33 formed on the alumina surface layer 32 can be improved. It is to be noted that when only one layer made of alumina is present on the substrate 30, it is considered that the layer is not the alumina surface layer 32 but is the intermediate layer 31.

The alumina surface layer 32 is preferably formed by alumina particles having particle diameters of 0.4 to 3 µm, and more preferably formed by alumina particles having particle diameters of 0.4 to 1.0 µm. A separation performance holding strength can be improved by using the alumina particles having particle diameters of 0.4 µm or more. Membrane forming properties of the separation layer 33 to be formed on the alumina surface layer 32 can be improved by using the alumina particles having particle diameters of 3 µm or less. It is to be noted that the particle diameters of the alumina particles are values measured by optical scattering particle size measurement.

A thickness of the alumina surface layer 32 is preferably from 5 to 80 µm and more preferably from 10 to 40 µm. A purity of alumina for use in the alumina surface layer 32 is preferably 90% or more.

The alumina surface layer 32 preferably includes a magnesium-based compound. A content ratio of Mg in the magnesium-based compound is preferably 30 mass% or less, more preferably from 1 to 25 mass%, and most preferably from 2 to 10 mass% to alumina of the alumina surface layer 32. When the alumina surface layer 32 includes the magnesium-based compound, a sinterability improves in a case where the layer is sintered at the same temperature, and the separation performance holding strength improves more than the alumina surface layer which does not include the magnesium-based compound. Furthermore, when the content ratio of Mg is 30 mass% or less, a thermal expansion difference from the intermediate layer 31 is reduced, and the generation of cracks of the alumina surface layer 32 can be prevented.

### (Separation Layer)

The separation layer 33 (the separation membrane) is provided with a plurality of pores, has a smaller average pore diameter as compared with the porous body 9 (the substrate 30, the intermediate layer 31, and the alumina surface layer 32), and is disposed at the inner wall surface of each of the cells 4 (the surface of each of the partition walls 3). The separation layer 33 can separate the mixture. In the ceramic filter of a structure including the separation layer 33 in this manner, a separating function is exerted exclusively by the separation layer 33, and hence the average pore diameter of the porous body 9 can be increased. Therefore, it is possible to decrease a flow resistance when the fluid allowed to permeate the separation layer 33 and move from the cells 4 into the porous body 9 permeates the porous body 9, and it is possible to improve a fluid permeability.

The average pore diameter of the separation layer 33 can suitably be determined in accordance with a required filtering performance or separation performance (particle diameters of a substance to be removed). For example, in the case of the ceramic filter for use in the precise filtration or the ultrafiltration, the average pore diameter is preferably from 0.01 to 1.0 µm. In this case, the average pore diameter of the separation layer 33 is a value measured by the air flow method described in ASTM F316.

As the separation layer 33, a gas separation membrane and a reverse osmosis membrane can be employed. There is not any special restriction on the gas separation membrane, and a known carbon monoxide separation membrane, a helium separation membrane, a hydrogen separation membrane, a carbon membrane, a zeolite membrane, a silica membrane, a titania UF membrane or the like may suitably be selected in accordance with a type of gas to be separated.

When the separation layer 33 is the zeolite membrane, a zeolite of a crystal structure such as LTA, MFI, MOR, FER, FAU or DDR can be utilized as the zeolite. When the separation layer 33 is made of the DDR type zeolite, the layer can be utilized especially as the gas separation membrane for use in selectively separating carbon dioxide.

### (Plugging Portion)

A plugging material preferably includes aggregate particles, an inorganic bonding material, a binder, a thickener and a water holding agent. This plugging material can be formed of the same material as in the porous body 9. A porosity of the plugging portions 8 is preferably from 25 to 50%. When the porosity of the plugging portions 8 is in excess of 50%, a solid content included in a slurry for the intermediate layer which is for use in forming the intermediate layer 31 passes through the plugging portions 8 sometimes. On the other hand, when the porosity of the plugging portions 8 is smaller than 20%, it becomes difficult sometimes to discharge a water content included in the slurry for the intermediate layer which is for use in forming the intermediate layer 31.

### (Glass Seal)

In the separation membrane structure 1 according to the present invention, to prevent a mixed fluid including the permeated separation component from directly flowing into a porous body portion of the end face 2 of the separation membrane structure 1 and flowing outside without being separated by the separation layer 33 formed at the inner wall surface of the predetermined separation cell 4a, a glass seal 35 is preferably further disposed to cover the porous body 9 on the side of the end face 2 of the separation membrane structure 1 into which the mixed fluid flows.

### (Separation Membrane Structure)

An internal pressure breaking strength at which the separation membrane structure 1 is broken when a pressure is applied to the insides of the cells 4a is 16 MPa or more. The internal pressure breaking strength corresponds to a pressure applied to the insides of the cells 4a to break the separation membrane structure 1. Heretofore, there has not been the honeycomb shaped ceramic separation membrane structure having the internal pressure breaking strength of 16 MPa or more. The separation membrane structure 1 of the present invention has a higher internal pressure breaking strength than before, in a case where the substrate thickness/the intermediate layer thickness which is a ratio between the substrate thickness 40 and the intermediate layer thickness 41 (see Fig. 3) is in a predetermined range or in another case.

### 2. Separating Method

Next, there will be described a method of separating part of components from a fluid in which a plurality of types of fluids are mixed by using the separation membrane structure 1 of the present embodiment. As shown in Fig. 5A, when the fluid is separated by using the honeycomb shaped separation membrane structure 1 of the present embodiment, the separation membrane structure 1 is placed in a tubular housing 51 having a fluid inlet 52 and a fluid outlet 53, and a fluid F1 to be treated which is allowed to flow into the fluid inlet 52 of the housing 51 is preferably separated by the separation membrane structure 1. Then, the separated fluid to be treated (a treated fluid F2) is preferably discharged from the fluid outlet 53.

When the separation membrane structure 1 is placed in the housing 51, as shown in Fig. 5A, gaps between the separation membrane structure 1 and the housing 51 are preferably closed with sealing materials 54, 54 in both end portions of the separation membrane structure 1.

All of the fluid F1 to be treated which is allowed to flow from the fluid inlet 52 into the housing 51 flows into the cells 4 of the separation membrane structure 1, and the fluid F1 to be treated which is allowed to flow into the cells 4 permeates the separation layer 33 to penetrate the substrate 30 as the treated fluid F2. Then, the fluid flows outside from the substrate 30 through the outer peripheral surface 6 of the substrate 30 and is discharged from the fluid outlet 53 to the outside (the external space). The fluid F1 to be treated and the treated fluid F2 can be prevented from being mixed by the sealing materials 54, 54.

There is not any special restriction on a material of the housing 51, but an example of the material is a stainless steel. Furthermore, there is not any special restriction on the sealing material 54, but an example of the sealing material is an O-ring. Furthermore, examples of the sealing material 54 include fluorine rubber, silicone rubber, and ethylene propylene rubber. These materials are also suitable for use at a high temperature for a long time.

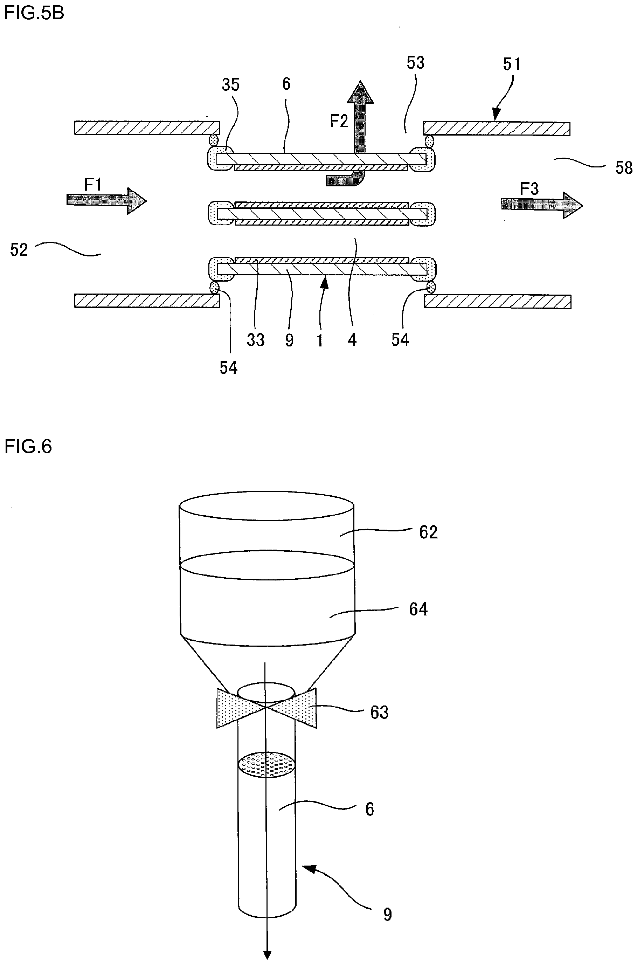

Fig. 5B shows another embodiment in which a separation membrane structure 1 is attached to a housing 51. As shown in Fig. 5B, the separation membrane structure 1 is placed in the tubular housing 51 having a fluid inlet 52 and fluid outlets 53, 58. In this embodiment, a fluid F1 to be treated which is allowed to flow from the fluid inlet 52 of the housing 51 is separated by the separation membrane structure 1, the separated fluid to be treated (a treated fluid F2) can be discharged from the fluid outlet 53, and a remainder (a fluid F3) can be discharged from the fluid outlet 58. The fluid F3 can be discharged from the fluid outlet 58. Therefore, an operation can be performed at a high flow speed of the fluid F1 to be treated, and a permeation flow speed of the treated fluid F2 can be increased. In general, a deposited layer of a cut component is formed in a membrane surface of a filter, and hence a permeation amount of the treated fluid F2 decreases. Furthermore, by concentration polarization where a concentration of a component which does not permeate the membrane even in gas separation increases, the permeation amount of the treated fluid F2 decreases. However, when the flow speed of the fluid F1 to be treated is high, the cut component flows to the fluid outlet 58. Therefore, the formation of the deposited layer or the concentration polarization is alleviated, and the separation membrane structure is not easily clogged.

### 3. Manufacturing Method

### (Substrate)

Next, a manufacturing method for the separation membrane structure 1 according to the present invention will be described. First, a raw material of the porous body 9 is formed. For example, the raw material is extruded by using a vacuum extrusion machine. In consequence, the honeycomb shaped unfired substrate 30 having the separation cells 4a and the water collecting cells 4b is obtained. In addition, press molding, cast molding and the like are present and are suitably selectable.

Then, in the obtained unfired substrate 30, the discharge through channels 7 are formed each of which passes from one region of the outer peripheral surface 6 through the water collecting cell 4b to communicate with another region.

Next, the plugging material of a slurry state is charged into a space reaching the discharge through channels 7 from both the end faces 2a, 2b of the water collecting cells 4b of the unfired substrate 30 with the obtained discharge through channels 7.

### (Intermediate Layer)

Then, the intermediate layer 31 to become a base of the separation layer 33 is formed at the inner wall surfaces of the separation cells 4a of the substrate 30. To form the intermediate layer 31 (to form the membrane), the slurry for the intermediate layer is first prepared. The slurry for the intermediate layer can be prepared by adding 400 parts by mass of water to 100 parts by mass of a ceramic raw material which is the same material as in the substrate 30 and includes alumina, mullite, titania or cordierite having desirable particle diameters (e.g., an average particle diameter of 3.2 µm).

Furthermore, the inorganic bonding material is added to this intermediate layer slurry to improve a strength of the sintered membrane. As the inorganic bonding material, titania is used. A particle diameter of titania prior to the firing is preferably from 0.1 to 1 µm and more preferably from 0.2 to 0.5 µm. When the particle diameter is 0.1 µm or more, titania sufficiently remains in the intermediate layer during the membrane formation, and when the particle diameter is 1 µm or less, titania easily functions as the bonding material. It is to be noted that the particle diameter is a value of optical scattering particle size measurement. The slurry for the intermediate layer which includes such aggregates and a titania sol as the inorganic bonding material is adhered to the inner wall surfaces of the separation cells 4a, dried and fired at 1250°C or more for 12 hours or more to form the intermediate layer 31 (by use of a device disclosed in, e.g., JP-A-S61-238315). A firing temperature is preferably 1500°C or less. When the firing temperature is from 1250 to 1500°C, sintering can sufficiently be performed, and it is possible to prevent that the sintering further advances excessively to close the pores.

For the intermediate layer 31, a plurality of separate layers can be formed by using a plurality of types of slurries in which the average particle diameters are varied. A second intermediate layer is disposed on a first intermediate layer, so that it is possible to decrease an influence of unevenness of the surface of the porous body 9. As a result, even when the separation layer 33 is a thin membrane, defects of the separation membrane structure 1 can be decreased. That is, it is possible to obtain the separation membrane structure 1 provided with the separation layer 33 having high flux, low cost and high separation ability.

### (Alumina Surface Layer)

Next, the alumina surface layer 32 is formed on the intermediate layer 31. To form the alumina surface layer 32 (to form the membrane), a slurry for the alumina surface layer is first prepared. The slurry for the alumina surface layer can be prepared by dispersing alumina particulates in a dispersion solvent such as water, and adding a sintering auxiliary agent, an organic binder, a pH regulator, a surfactant or the like as needed. Then, in a membrane forming step, this slurry for the alumina surface layer is allowed to flow down on the surface of the porous body 9 by a deadweight, whereby the alumina surface layer 32 can be formed. Alternatively, the slurry for the alumina surface layer is allowed to pass through the cells 4 and is sucked from the outside of the porous body 9 by a pump or the like, whereby the alumina surface layer 32 can be formed. Next, the alumina surface layer 32 is dried in a drier. Alternatively, forced-air drying is performed. Especially, when the slurry for the alumina surface layer to which the magnesium-based compound is added is used, a forced-air drying step is preferably included. The air is passed through the surface of the porous body 9 to which the slurry for the alumina surface layer is adhered, whereby a drying speed of the surface of the porous body 9 increases. Furthermore, magnesium ions can be moved and easily collected on the surface together with movement of a liquid when the liquid is evaporated. Next, the alumina surface layer 32 is fired. The alumina surface layer 32 is preferably formed by performing the firing at 1150 to 1450°C. When the firing is performed at 1150°C or more, alumina can be sintered so that a strength is sufficiently maintained. Furthermore, when the firing temperature is 1450°C or less, pores of alumina are not closed but a gas permeation amount is sufficiently maintained. When the alumina surface layer 32 contains an Mg component, for example, MgCl₂, MgCO₃, Mg(CH₃COO)₂, MgSO₄, Mg(NO₃)₂, Mg(OH)₂ or the like can be added.

### (Separation Layer)

Next, the separation layer 33 is formed on the intermediate layer 31 (on the alumina surface layer 32, when the alumina surface layer 32 is formed). A case where the zeolite membrane is disposed as the separation layer 33 will be described. A manufacturing method of the zeolite membrane includes a particle adhering step of allowing a slurry in which zeolite particles to become seeds are dispersed to flow down on the surface of the porous body 9 by its own weight to adhere the zeolite particles to the porous body 9, and a membrane forming step of immersing the porous body 9 to which the zeolite particles are adhered into a sol to carry out hydrothermal synthesis, thereby forming the zeolite membrane on the porous body 9. The flow-down in the particle adhering step is to allow the slurry to freely drop down on the porous body 9 by its own weight, whereby the slurry flows on the surface of the porous body 9. In a flow-down method, for example, the slurry is poured into a hole of the porous body 9 in which the hole is made in a cylindrical shape, thereby allowing a large amount of liquid to flow in parallel with the surface. In this case, the slurry allowed to flow down flows through the surface of the porous body 9 by its own weight. Therefore, less slurry penetrates into the porous body 9. On the other hand, a heretofore known dripping method is, for example, a method of dripping a small amount of a slurry vertically onto a flat plate, and the dripped slurry penetrates into the flat plate by its own weight. Therefore, a membrane thickness increases.

### [1] Preparation of Seeding Slurry Liquid/Seeding (Particle Adhering Step)

DDR type zeolite crystal powder is manufactured, and this powder is used as it is, or ground as needed for use as seed crystals. The DDR type zeolite powder (this becomes the seed crystals) is dispersed in a solvent to form a slurry 64 (a seeding slurry liquid). The seeding slurry liquid is preferably diluted with the solvent so that a concentration of a solid content included in this liquid is 1 mass% or less. As the solvent for dilution, water, ethanol, or ethanol aqueous solution is preferable. As the solvent for use in dilution, except for water or ethanol, an organic solvent such as acetone or IPA, or an organic solvent aqueous solution is usable. By the use of the organic solvent having a high volatility, a drying time can be shortened, and simultaneously, a penetrating amount of the seeding slurry 64 can be decreased, so that it is possible to form a thinner zeolite membrane. As a method of dispersing the DDR type zeolite powder in the slurry liquid, a general stirring method may be employed and a method of an ultrasonic treatment or the like may be employed.

Fig. 6 shows one embodiment of the seeding (the particle adhering step) by the flow-down method. The porous body 9 is anchored to a lower end of a wide-mouthed funnel 62, and by opening a cock 63, the seeding slurry 64 is poured from the upside of the porous body 9 and passed through the cells 4, whereby the particle adhering step can be performed.

A concentration of a solid content in the seeding (particle adhering step) slurry 64 is preferably in a range of 0.00001 to 1 mass%, more preferably in a range of 0.0001 to 0.5 mass%, and further preferably in a range of 0.0005 to 0.2 mass%. When the concentration is smaller than a lower limit value of the concentration range, the number of steps increases to cause cost increase. Furthermore, when the concentration is in excess of 1 mass%, a thick zeolite particle layer is formed on the surface of the porous body 9, and the thick membrane is formed to cause a low flux.

In the slurry 64 of the particle adhering step, water may be used as a solvent in which the zeolite particles are dispersed. Furthermore, an organic solvent or an organic solvent aqueous solution may be used. Furthermore, ethanol, ethanol aqueous solution or the like is usable. In particular, when ethanol having a high volatility is used as the solvent, the inside of the porous body 9 is pressurized by evaporated ethanol immediately after the flow-down. Therefore, the liquid allowed to flow down is pushed to the surface of the porous body 9, and the penetrating amount of the seeding slurry can further be decreased.

In the particle adhering step, a step (Fig. 6) of allowing the slurry 64 including the zeolite particles that become the seeds to flow down is preferably performed a plurality of times. The plurality of times is about twice to ten times. When the step is performed the plurality of times, the zeolite particles can evenly be adhered to the whole surface of the porous body 9.

The manufacturing method of the zeolite membrane preferably includes the forced-air drying step after the slurry 64 including the zeolite particles that become the seeds is allowed to flow down. The forced-air drying is to pass forced-air through the surface of the porous body 9 to which the slurry 64 including the zeolite particles is adhered, thereby drying the slurry 64. When the forced-air drying is performed, a drying speed increases, and the zeolite particles can be moved and easily collected on the surface together with the movement of the liquid when the liquid is evaporated.

Furthermore, the forced-air drying is preferably performed with humidified air. When the forced-air drying is performed with the humidified air, the seeds can more strongly be anchored onto the porous body 9. The seeds are strongly anchored onto the porous body 9, so that it is possible to prevent detachment of the zeolite particles during the subsequent hydrothermal synthesis and it is possible to stably prepare the zeolite membrane having less defects. It is to be noted that a similar effect can be obtained also by including an exposure step of exposing, in water vapor after the forced-air drying, the porous body 9 dried with the forced air which is not humidified after the slurry 64 is allowed to flow down for the seeding.

### [2] Preparation of Raw Material Solution (Sol)

Next, there is prepared a raw material solution including 1-adamantaneamine dissolved in ethylenediamine and having a predetermined composition.

1-adamantaneamine is an SDA (a structure defining agent) in synthesis of the DDR type zeolite, i.e., a substance that becomes a mold to form a crystal structure of the DDR type zeolite, and hence a molar ratio to SiO₂ (silica) that is a raw material of the DDR type zeolite is important. The 1-adamantaneamine/SiO₂ molar ratio needs to be in a range of 0.002 to 0.5, and is preferably in a range of 0.002 to 0.2 and further preferably in a range of 0.002 to 0.03. When the 1-adamantaneamine/SiO₂ molar ratio is smaller than this range, 1-adamantaneamine as SDA is running short, and it is difficult to form the DDR type zeolite. On the other hand, when the ratio is in excess of this range, expensive 1-adamantaneamine is disadvantageously added more than necessary, which is unfavorable from the aspect of manufacturing cost.

1-adamantaneamine is not easily soluble in water that is a solvent of the hydrothermal synthesis, and is therefore dissolved in ethylenediamine and then used for the preparation of the raw material solution. 1-adamantaneamine is completely dissolved in ethylenediamine to prepare the raw material solution of a uniform state, whereby the DDR type zeolite having a uniform crystal size can be formed. An ethylenediamine/1-adamantaneamine molar ratio needs to be in a range of 4 to 35, and is preferably in a range of 8 to 24 and further preferably in a range of 10 to 20. When the ethylenediamine/1-adamantaneamine molar ratio is smaller than this range, an amount of ethylenediamine to completely dissolve 1-adamantaneamine is not sufficiently maintained. On the other hand, when the ratio is in excess of this range, ethylenediamine is disadvantageously used more than necessary, which is unfavorable from the aspect of manufacturing cost.

In the manufacturing method of the present invention, colloidal silica is used as a silica source. As colloidal silica, commercially available colloidal silica can suitably be used, but colloidal silica can be prepared by dissolving fine powder silica in water or by hydrolysis of alkoxide.

A molar ratio (a water/SiO₂ molar ratio) between water and SiO₂ (silica) included in the raw material solution needs to be in a range of 10 to 500, and is preferably in a range of 14 to 250 and further preferably in a range of 14 to 112. When the water/SiO₂ molar ratio is smaller than this range, a concentration of SiO₂ in the raw material solution is excessively high, which is unfavorable in that a large amount of unreacted SiO₂ which is not crystallized remains. On the other hand, when the ratio is in excess of this range, the concentration of SiO₂ in the raw material solution is excessively low, which is unfavorable in that the DDR type zeolite cannot be formed.

According to the manufacturing method of the present invention, in addition to all silica type of DDR type zeolite, DDR type zeolite including aluminum and metal cations in a framework (hereinafter described as "a low silica type of DDR type zeolite") can be manufactured. This low silica type of DDR type zeolite has cations in pores, and is different from the all-silica type of DDR type zeolite in an adsorption performance or a catalyst performance. When the low silica type of DDR type zeolite is manufactured, an aluminum source and a cation source are added in addition to water as the solvent and colloidal silica as the silica source, to prepare the raw material solution.

As the aluminum source, aluminum sulfate, sodium aluminate, metal aluminum or the like is usable. An SiO₂/Al₂O₃ molar ratio in a case where aluminum is converted as an oxide needs to be in a range of 50 to 1000, and is preferably in a range of 70 to 300 and further preferably in a range of 90 to 200. When the SiO₂/Al₂O₃ molar ratio is smaller than this range, a ratio of amorphous SiO₂ other than the DDR type zeolite is unfavorably large. On the other hand, when the molar ratio is in excess of this range, the DDR type zeolite can be manufactured. However, an amount of aluminum and an amount of the cations remarkably decrease, and hence characteristics of the low silica type of DDR type zeolite cannot be exerted, which is unfavorable in that there is not any difference between this type of zeolite and the all-silica type of zeolite.

Examples of the cations include cations of an alkali metal, i.e., one of K, Na, Li, Rb and Cs. For a cation source, the example of Na is described. Examples of the cation source include sodium hydroxide and sodium aluminate. An X₂O/Al₂O₃ molar ratio in a case where the alkali metal is converted as an oxide needs to be in a range of 1 to 25, and is preferably in a range of 3 to 20 and further preferably in a range of 6 to 15. When the X₂O/Al₂O₃ molar ratio is smaller than this range, the DDR type zeolite of a desired SiO₂/Al₂O₃ molar ratio unfavorably is not easily obtained. On the other hand, when the molar ratio is in excess of this range, amorphous SiO₂ unfavorably is mixed in a product.

The preparation of the raw material solution has been described above, but an example of an especially preferable mode is a method in which a solution obtained by dissolving 1-adamantaneamine in ethylenediamine, water that is the solvent and colloidal silica (when the low silica type of DDR is synthesized, further, aluminum sulfate that is the aluminum source and sodium hydride as the cation source) are mixed at a predetermined ratio and dissolved, to prepare the raw material solution.

### [3] Membrane Formation (Membrane Forming Step)

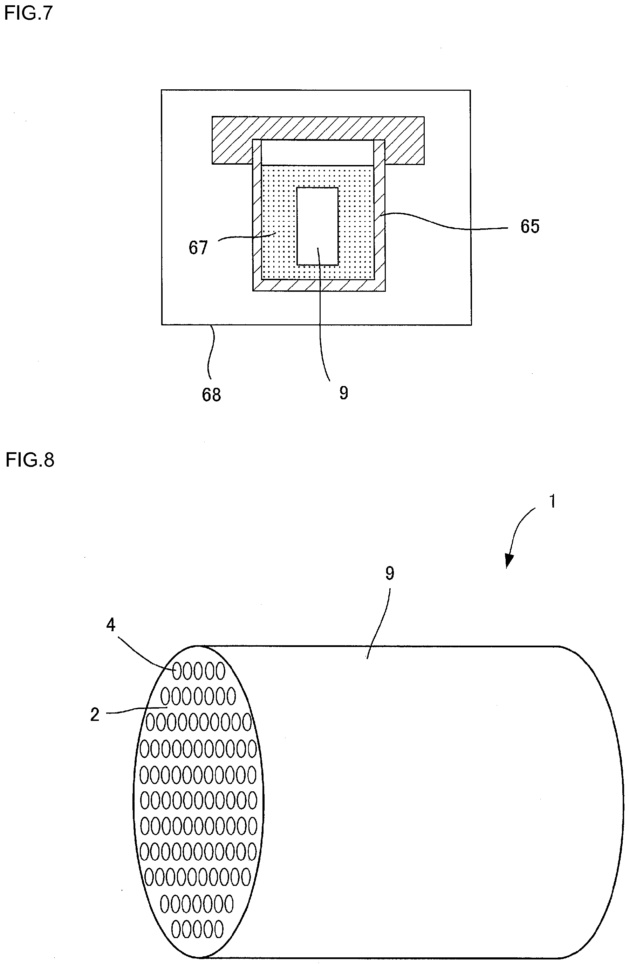

A container (e.g., a wide-mouthed bottle) in which the raw material solution is contained is set to a homogenizer to stir the solution, thereby obtaining a sol 67 for use in hydrothermal synthesis. Next, as shown in Fig. 7, the porous body 9 seeded by the flow-down method is placed in a pressure-resistant container 65, and the prepared sol 67 is further placed. Afterward, this container is placed in a drier 68, and a heating treatment (the hydrothermal synthesis) is performed at 110 to 200°C for 16 to 120 hours, thereby manufacturing the zeolite membrane.

A temperature (a synthesis temperature) of the heating treatment is preferably in a range of 110 to 200°C, further preferably in a range of 120 to 180°C, and especially preferably in a range of 120 to 170°C. When the temperature of the heating treatment is smaller than this range, the DDR type zeolite unfavorably cannot be formed. On the other hand, when the temperature is in excess of this range, a DOH type zeolite that is not a desired substance is unfavorably formed by phase transition.

As a time of the heating treatment (a synthesis time) in the manufacturing method of the present invention, a remarkably short time of several hours to five days is sufficient. In the manufacturing method of the present invention, the DDR type zeolite powder is added to the substrate by the flow-down method, and hence crystallization of the DDR type zeolite is promoted.

In the manufacturing method of the present invention, the raw material solution (the sol 67) does not have to be always stirred during the heating treatment. This is because 1-adamantaneamine to be included in the raw material solution is dissolved in ethylenediamine and hence the raw material solution is held in the uniform state. It is to be noted that in a conventional method, when the raw material solution is not always stirred, mixed crystals of DDR and DOH are disadvantageously formed sometimes, but according to the manufacturing method of the present invention, even when the raw material solution is not always stirred, DOH is not formed, and single-phase crystals of DDR can be formed.

### [4] Washing/Structure Defining Agent Removal

Next, the porous body 9 provided with the zeolite membrane is washed with water or boiled and washed at 80 to 100°C, taken out and dried at 80 to 100°C. Then, the porous body 9 is placed in an electric furnace and heated at 400 to 800°C in the atmosphere for 1 to 200 hours, thereby burning and removing 1-adamantaneamine in the pores of the zeolite membrane. As described above, it is possible to form the zeolite membrane having less defects and a smaller and more uniform membrane thickness of 10 µm or less than before.

The manufacturing method of the zeolite membrane can be applied to a zeolite of a crystal structure of LTA, MFI, MOR, FER, FAU or DDR.

It is to be noted that as the separation membrane structure 1, there has been described the embodiment in which the end faces 2 are plugged with the plugging material to form the plugging portions 8, and the separation cells 4a, the water collecting cells 4b and the discharge through channels 7 are disposed. However, as shown in Fig. 8, the structure may be constituted so that the end faces are not plugged, but the separation layer 33 may be disposed in all the cells 4 of the honeycomb shaped porous body 9, and the water collecting cells 4b and the discharge through channels 7 are not disposed.

### Examples

Hereinafter, the present invention will be described in more detail on the basis of examples, but the present invention is not limited to these examples.

### (Substrate)

20 parts by mass of an inorganic bonding material was added to 100 parts by mass of alumina particles (aggregate particles) having an average particle diameter of 50 µm, and water, a dispersing agent and a thickener were further added, mixed and kneaded to prepare a kneaded material. The obtained kneaded material was extruded to prepare a honeycomb shaped unfired substrate 30.

For the inorganic bonding material, there was used a glass raw material containing SiO₂ (80 mol%), Al₂O₃ (10 mol%) and alkaline earth (8 mol%) and molten at 1600°C, homogenized, cooled and then ground into an average particle diameter of 1 µm.

In the unfired substrate 30, there were formed discharge through channels 7 each of which passed from one region of an outer peripheral surface 6 through a water collecting cell 4b to communicate with another region.

Next, a plugging material of a slurry state was charged into a space reaching the discharge through channels 7 from both end faces 2a, 2b of the substrate 30. Then, the substrate 30 was fired. For firing conditions, the firing was performed at 1250°C for one hour, and each of a temperature raising speed and a temperature lowering speed was set to 100°C/hour. An average pore diameter of the substrate was 20 µm.

### (Intermediate Layer)

Next, on inner wall surfaces of cells 4 of the substrate 30, an intermediate layer 31 made of an alumina porous material having a thickness of 150 µm to 250 µm and an average pore diameter of 0.5 µm was formed as follows. The average pore diameter is a value measured by an air flow method described in ASTM F316.

First, an inorganic bonding material was added to alumina particles (aggregate particles) having an average particle diameter of 31 µm, and water, a dispersing agent and a thickener were further added and mixed to prepare a slurry.

In Examples 1 to 6, as the inorganic bonding material for the preparation of the slurry, there was used a raw material in which a purity of titania was 99.9 mass% or more, a particle diameter of titania was from 0.1 to 1 µm, and a percentage of titania is from 10 to 30 mass% of a solid content (alumina aggregates + a titania bonding material).

In Comparative Example 1, as the inorganic bonding material for the preparation of the slurry, there was used a glass raw material containing SiO₂ (77 mol%), ZrO₂ (10 mol%), Li₂O (3.5 mol%), Na₂O (4 mol%), K₂O (4 mol%), CaO (0.7 mol%) and MgO (0.8 mol%) and molten at 1600°C, homogenized, cooled and then ground in an average particle diameter of 1 µm.

The above slurry was adhered to the inner peripheral surface of the substrate 30 by a filtration membrane forming method described in JP-B-S63-66566. Afterward, the firing was performed in an electric furnace under the air atmosphere to form the intermediate layer 31. For firing conditions, the firing was performed at 1250°C for 12 hours in Examples 1 to 6, the firing was performed at 1150°C for one hour in Comparative Example 1, and each of a temperature raising speed and a temperature lowering speed was set to 100°C/hour in each of these examples.

### (Alumina Surface Layer)

Next, an alumina surface layer 32 made of a porous alumina material having a thickness of 20 µm and an average particle diameter of 0.1 µm was formed on an inner peripheral surface of a porous body 9 of each of Examples 1 to 6 and Comparative Example 1. The average pore diameter is a value measured by an air flow method described in ASTM F316.

A percentage of titania included in the formed intermediate layer 31 was measured by EDS. Table 1 shows the percentage of titania, a thickness of the intermediate layer and the like.

For the porous body 9, an outer shape thereof was columnar, an outer diameter thereof was 30 mm, and a length thereof was 160 mm.

### (Formation of Glass Seal)

Next, glass seals 35 were disposed in both the end faces 2a, 2b of the substrate 30 in a state where open ends of the cells 4 were not closed.

### (Formation of DDR Membrane)

A DDR membrane was formed as a separation layer 33 (a separation membrane) on the alumina surface layer 32 as follows (see Fig. 2).

### (1) Preparation of Seed Crystals

On the basis of a method of manufacturing a DDR type zeolite described in M. J. den Exter, J. C. Jansen, H. van Bekkum, Studies in Surface Science and Catalysis vol. 84, Ed. by J. Weitkamp et al., Elsevier (1994) 1159 to 1166, or JP-A-2004-083375, DDR type zeolite crystal powder was manufactured, and this powder was used as it was, or ground as needed for use as seed crystals. The synthesized or ground seed crystals were dispersed in water, and then coarse particles were removed, to prepare a seed crystal dispersion liquid.

### (2) Seeding (Particle Adhering Step)

The seed crystal dispersion liquid prepared in (1) was diluted with ion-exchanged water or ethanol and regulated so that a DDR concentration was from 0.001 to 0.36 mass% (a concentration of a solid content in a slurry 64), and the dispersion liquid was stirred at 300 rpm by a stirrer to obtain a seeding slurry liquid (the slurry 64). The porous body 9 which was porous was anchored to a lower end of a wide-mouthed funnel 62, and 160 ml of a seeding slurry liquid was poured from the upside of the porous body 9 and passed through the cells (see Fig. 6). At this time, an outer peripheral surface 6 of the porous body 9 was masked with a Teflon (registered trademark) tape and then seeded. In the porous body 9 in which the slurry 64 was allowed to flow down, the insides of the cells were subjected to forced-air drying at room temperature or 80°C and at an air speed of 3 to 6 m/s for 10 to 30 minutes. The flow-down of the slurry 64 and the forced-air drying were repeated once to six times to obtain a sample. After the drying, microstructure observation by an electron microscope was carried out. It was confirmed that DDR particles were adhered to the surface of the porous body 9.

### (3) Membrane Formation (Membrane Forming Step: Hydrothermal Synthesis)

7.35 g of ethylenediamine (manufactured by Wako Pure Chemical Industries, Ltd.) was placed into a 100 ml wide-mouthed bottle made of fluororesin, and then 1.156 g of 1-adamantaneamine (manufactured by Aldrich Co.) was added and dissolved so that no precipitate of 1-adamantaneamine was left. 98.0 g of 30 mass% colloidal silica (Snowtex S manufactured by Nissan Chemical Industries, Ltd.) and 116.55 g of ion-exchanged water were placed into another container and lightly stirred. Afterward, this was added to the wide-mouthed bottle in which ethylenediamine and 1-adamantaneamine were mixed, and strongly shaken, to prepare a raw material solution. Molar ratios of the respective components of the raw material solution were 1-adamantaneamine/SiO₂ = 0.016 and water/SiO₂ = 21. Afterward, the wide-mouthed bottle containing the raw material solution was set to a homogenizer, and the solution was stirred for one hour. The porous body 9 to which the DDR particles were adhered in (2) was disposed in a stainless steel pressure-resistant container 65 with an inner cylinder having an inner capacity of 300 ml and made of fluororesin, and the prepared raw material solution (a sol 67) was placed, to perform a heating treatment (hydrothermal synthesis) at 138°C for 30 hours (see Fig. 7). Additionally, during the hydrothermal synthesis, the solution was alkaline (pH 11) by raw materials of colloidal silica and ethylenediamine. When a broken surface of the porous body 9 on which the membrane was formed was observed by a scanning type electron microscope, a membrane thickness of the DDR membrane was 10 µm or less.

### (4) Structure Defining Agent Removal

The membrane which could be coated was heated by an electric furnace at 450°C in the air for 50 hours, to burn and remove 1-adamantaneamine in the pores. By X-ray diffraction, a crystal phase was identified and a DDR type zeolite was confirmed. Furthermore, after the membrane formation, it was confirmed that the porous body 9 was coated with the DDR type zeolite.

As shown in Fig. 5A, a separation membrane structure 1 was placed in a tubular housing 51 having a fluid inlet 52 and a fluid outlet 53, and water was allowed to flow from the fluid inlet 52 into the housing 51 to pressurize the structure by the water. Then, there were checked internal pressure breaking strengths at which the porous body 9 before a DDR type zeolite membrane was formed and the separation membrane structure 1 after the DDR type zeolite membrane was formed (i.e., the porous body 9 + the separation layer 33 (the zeolite membrane)) were broken. When the water permeated the structure and the pressure did not rise, an inner surface of each cell 4 was coated with natural latex rubber and dried, to prevent the permeation of the water, thereby measuring the internal pressure breaking strength. Table 1 shows this result as a strength ratio. When the strength ratio is larger than 1, it is meant that the strength improves after the DDR type zeolite membrane is formed. On the other hand, when the strength ratio is smaller than 1, it is meant that the strength weakens after the DDR type zeolite membrane is formed.

**[Table 1]**

| | Intermediate layer | | | | | (Substrate thickness/intermediate layer thickness) ratio | Average strength | | (Strength after hydrothermal synthesis/substrate strength (before hydrothermal synthesis)) ratio |
|---|---|---|---|---|---|---|---|---|---|
| | Firing temp./time | Inorganic bonding material | Percentage of inorganic bonding material included in intermediate layer | Particle dia. of inorganic bonding material | Thickness of intermediate layer | | Substrate (before hydrothermal synthesis) | After hydrothermal synthesis | |
| | | | Mass% | µm | µm | | MPa | MPa | |
| Example 1 | 1250°C·12h | Titania | 20 | 0.25 | 250 | 2.6 | 18.1 | 20.2 | 1.12 |
| Example 2 | 1250°C·12h | Titania | 20 | 0.25 | 150 | 4.3 | 13.6 | 17.3 | 1.27 |
| Example 3 | 1250°C·12h | Titania | 10 | 0.1 | 250 | 2.6 | 15.3 | 16.2 | 1.06 |
| Example 4 | 1250°C·12h | Titania | 10 | 1 | 250 | 2.6 | 17.3 | 18.9 | 1.09 |
| Example 5 | 1250°C·12h | Titania | 30 | 0.1 | 250 | 2.6 | 15.1 | 17.8 | 1.18 |
| Example 6 | 1250°C·12h | Titania | 30 | 1 | 250 | 2.6 | 15.9 | 16.3 | 1.03 |
| Comparative Example 1 | 1150°C·1h | Glass | - | 1 | 250 | 2.6 | 18.1 | 14.9 | 0.82 |

In Comparative Example 1 in which the inorganic bonding material of the intermediate layer was glass, the strength deteriorated by the hydrothermal synthesis (the formation of the zeolite membrane). On the other hand, in Examples 1 to 6 in which the inorganic bonding material of the intermediate layer 31 was titania, the strength improved by the hydrothermal synthesis (the formation of the zeolite membrane).

### Industrial Applicability

A porous body and a separation membrane structure of the present invention can suitably be utilized as means for separating part of components from a mixed fluid.

### Description of Reference Numerals

1: (honeycomb shaped ceramic) separation membrane structure, 2, 2a and 2b: end face, 3: partition wall, 4: cell, 4a: separation cell, 4b: water collecting cell, 6: outer peripheral surface, 7: discharge through channel, 8: plugging portion, 9: (honeycomb shaped ceramic) porous body, 30: substrate, 31: intermediate layer, 32: alumina surface layer, 33: separation layer (separation membrane), 35: glass seal, 40: substrate thickness, 41: intermediate layer thickness, 42: cell diameter, 51: housing, 52: fluid inlet, 53 and 58: fluid outlet, 54: sealing material, 62: wide-mouthed funnel, 63: cock, 65: pressure-resistant container, 67: sol, and 68: drier.

## Claims

1. A honeycomb shaped porous ceramic body (9) comprising:
a honeycomb shaped substrate (30) which has partition walls (3) made of a porous ceramic material provided with a large number of pores and in which there are formed a plurality of cells (4, 4a, 4b) to become through channels of a fluid passing through the porous ceramic body (9) by the partition walls (3); and
an intermediate layer (31) which is made of a porous ceramic material provided with a large number of pores and having a smaller average pore diameter, as measured by an air flow method described in ASTM F316, as compared with the surface of the substrate (30) and which is disposed at the surface of the substrate (30),
wherein at least a part of the intermediate layer (31) has a structure in which aggregate particles are bonded to one another by a component of an inorganic bonding material, and
the component of the inorganic bonding material of the intermediate layer (31) is titania,
wherein a thickness of the intermediate layer (41) is 150 µm or more and 500 µm or less, and
wherein a substrate thickness (40) of the shortest portion between the cells (4, 4a, 4b) is 0.51 mm or more and 1.55 mm or less, and a ratio of the substrate thickness (40)/the intermediate layer thickness (41) is 2.5 or more and 10 or less.

2. The honeycomb shaped porous ceramic body (9) according to claim 1,
whose internal pressure breaking strength, as measured according to the description, does not deteriorate even when the porous ceramic body (9) is immersed into an alkali solution of pH 11 or more at 138°C or more for 30 hours.

3. The honeycomb shaped porous ceramic body (9) according to claim 1 or 2, wherein a content ratio of titania included in the intermediate layer (31) is from 5 to 40 mass%.

4. The honeycomb shaped porous ceramic body (9) according to any one of claim 1 to 3,
wherein the honeycomb shaped porous ceramic body (9) further includes an alumina surface layer (32) formed on the intermediate layer (31).

5. A honeycomb shaped ceramic separation membrane structure (1) comprising a separation layer (33) which separates a mixture, directly or indirectly on the intermediate layer (31) of the honeycomb shaped porous ceramic body (9) according to any one of claims 1 to 4.

6. The honeycomb shaped ceramic separation membrane structure (1) according to claim 5,
wherein an internal pressure breaking strength, as measured according to the description, is 16 MPa or more.

7. The honeycomb shaped ceramic separation membrane structure (1) according to claim 5 or 6,
wherein the separation layer (33) is formed of a zeolite.

8. The honeycomb shaped ceramic separation membrane structure (1) according to claim 7,
wherein the separation layer (33) is formed of a DDR type zeolite.

9. A manufacturing method for the honeycomb shaped porous ceramic body (9) according to claim 1 or 2,
in which a slurry for the intermediate layer (31) including aggregates and a titania sol as an inorganic bonding material is adhered to the substrate (30), dried, and then fired at 1250°C or more for 12 hours or more to form the intermediate layer (31).

## Patentansprüche

1. Honigwabenförmiger poröser keramischer Körper (9), der umfasst:
ein honigwabenförmiges Substrat (30), welches Trennwände (3) aufweist, die aus einem porösen keramischen Material, das mit einer großen Anzahl von Poren ausgestattet ist, hergestellt sind, und in welchem mehrere Zellen (4, 4a, 4b), die Durchgangskanäle eines Fluids, das durch den porösen keramischen Körper (9) tritt, durch die Trennwände (3) gebildet sind; und
eine Zwischenschicht (31), welche aus einem porösen keramischen Material hergestellt ist, das mit einer großen Anzahl an Poren ausgestattet ist und einen kleineren durchschnittlichen Porendurchmesser, wie mit einem Luftstromverfahren, das in ASTM F316 beschrieben ist, gemessen, im Vergleich zu der Oberfläche des Substrats (30) aufweist, und welches an der Oberfläche des Substrats (30) vorgesehen ist,
wobei zumindest ein Teil der Zwischenschicht (31) eine Struktur aufweist, in welcher Aggregatteilchen über einen Bestandteil aus einem anorganischen Bindematerial aneinander gebunden sind, und
der Bestandteil des anorganischen Bindematerials der Zwischenschicht (31) Titanoxid ist,
wobei eine Dicke der Zwischenschicht (41) 150 µm oder mehr und 500 µm oder weniger beträgt, und
wobei eine Substratdicke (40) des kürzesten Abschnitts zwischen den Zellen (4, 4a, 4b) 0,51 mm oder mehr und 1,55 mm oder weniger ist, und ein Verhältnis von Substratdicke (40) / Zwischenschichtdicke (41) 2,5 oder mehr und 10 oder weniger beträgt.

2. Honigwabenförmiger poröser keramischer Körper (9) nach Anspruch 1,
dessen interne Druckbruchfestigkeit, wie gemäß der Beschreibung gemessen, sich selbst dann nicht verschlechtert, wenn der poröse keramische Körper (9) in eine alkalische Lösung mit pH 11 oder mehr bei 138°C oder mehr für 30 Stunden eingetaucht wird.

3. Honigwabenförmiger poröser keramischer Körper (9) nach Anspruch 1 oder 2,
wobei ein Gehaltverhältnis von Titanoxid, das in der Zwischenschicht (31) beinhaltet ist, von 5 bis 40 Masse-% beträgt.

4. Honigwabenförmiger poröser keramischer Körper (9) nach einem der Ansprüche 1 bis 3,
wobei der honigwabenförmige poröse keramische Körper (9) ferner eine Aluminiumoxidoberflächenschicht (32) beinhaltet, die auf der Zwischenschicht (31) gebildet ist.

5. Honigwabenförmige keramische Trennmembranstruktur (1), umfassend eine Trennschicht (33), welche eine Mischung trennt, direkt oder indirekt auf der Zwischenschicht (31) des honigwabenförmigen porösen keramischen Körpers (9) nach einem der Ansprüche 1 bis 4.

6. Honigwabenförmige keramische Trennmembranstruktur (1) nach Anspruch 5,
wobei die interne Druckbruchfestigkeit, wie gemäß der Beschreibung gemessen, 16 MPa oder mehr beträgt.

7. Honigwabenförmige keramische Trennmembranstruktur (1) nach Anspruch 5 oder 6,
wobei die Trennschicht (33) aus einem Zeolith gebildet ist.

8. Honigwabenförmige keramische Trennmembranstruktur (1) nach Anspruch 7,
wobei die Trennschicht (33) aus einem DDR-Typ Zeolith gebildet ist.

9. Herstellungsverfahren für den honigwabenförmigen porösen keramischen Körper (9) nach Anspruch 1 oder 2,
in welchem eine Aufschlämmung für die Zwischenschicht (31), die Aggregate und ein Titanoxidsol als ein anorganisches Bindematerial beinhaltet, an das Substrat (30) angehaftet wird, getrocknet wird, und dann bei 1250°C oder mehr für 12 Stunden oder mehr gebrannt wird, um die Zwischenschicht (31) zu bilden.

## Revendications

1. Corps en céramique poreux (9) en forme de nid d'abeilles comprenant :
un substrat (30) en forme de nid d'abeilles qui a des cloisons (3) faites d'un matériau en céramique poreux doté d'un grand nombre de pores et dans lequel sont formées une pluralité de cellules (4, 4a, 4b) pour devenir des canaux traversants d'un fluide passant à travers le corps en céramique poreux (9) par les cloisons (3) ; et
une couche intermédiaire (31) qui est faite d'un matériau en céramique poreux doté d'un grand nombre de pores et ayant un diamètre de pore moyen plus petit, tel que mesuré par un procédé à écoulement d'air décrit selon la norme ASTM F316, par rapport à la surface du substrat (30) et qui est disposée au niveau de la surface du substrat (30),
dans lequel au moins une partie de la couche intermédiaire (31) a une structure dans laquelle des particules d'agrégats sont liées les unes aux autres par un composant d'un matériau de liaison inorganique, et
le composant du matériau de liaison inorganique de la couche intermédiaire (31) est l'oxyde de titane,
dans lequel une épaisseur de la couche intermédiaire (41) est de 150 µm ou plus et de 500 µm ou moins, et
dans lequel une épaisseur de substrat (40) de la portion la plus courte entre les cellules (4, 4a, 4b) est de 0,51 mm ou plus et de 1,55 mm ou moins, et un rapport de l'épaisseur de substrat (40)/l'épaisseur de couche intermédiaire (41) est de 2,5 ou plus et de 10 ou moins.

2. Corps en céramique poreux (9) en forme de nid d'abeilles selon la revendication 1, dont la résistance à la rupture sous pression interne, telle que mesurée selon la description, ne se détériore par même si le corps en céramique poreux (9) est immergé dans une solution alcaline de pH 11 ou plus à 138 °C ou plus pendant 30 heures.

3. Corps en céramique poreux (9) en forme de nid d'abeilles selon la revendication 1 ou 2,
dans lequel un rapport de teneur de l'oxyde de titane inclus dans la couche intermédiaire (31) est de 5 à 40% en masse.

4. Corps en céramique poreux (9) en forme de nid d'abeilles selon l'une quelconque des revendications 1 à 3,
dans lequel le corps en céramique poreux (9) en forme de nid d'abeilles inclut en outre une couche de surface en alumine (32) formée sur la couche intermédiaire (31).

5. Structure de membrane de séparation en céramique en forme de nid d'abeilles (1) comprenant une couche de séparation (33) qui sépare un mélange, directement ou indirectement sur la couche intermédiaire (31) du corps en céramique poreux (9) en forme de nid d'abeilles selon l'une quelconque des revendications 1 à 4.

6. Structure de membrane de séparation en céramique en forme de nid d'abeilles (1) selon la revendication 5,
dans laquelle une résistance à la rupture sous pression interne, telle que mesurée selon la description, est de 16 MPa ou plus.

7. Structure de membrane de séparation en céramique en forme de nid d'abeilles (1) selon la revendication 5 ou 6,
dans laquelle la couche de séparation (33) est formée par une zéolite.

8. Structure de membrane de séparation en céramique en forme de nid d'abeilles (1) selon la revendication 7,
dans laquelle la couche de séparation (33) est formée par une zéolite de type DDR.

9. Procédé de fabrication pour le corps en céramique poreux (9) en forme de nid d'abeilles selon la revendication 1 ou 2,
dans lequel une suspension pour la couche intermédiaire (31) incluant des agrégats et un sol d'oxyde de titane en tant que matériau de liaison inorganique est mise à adhérer au substrat (30), séchée, et ensuite cuite à 1250 °C ou plus pendant 12 heures ou plus pour former la couche intermédiaire (31).
